# EUROPEAN PATENT SPECIFICATION

(11) **EP 0 381 079 B1**
(45) Date of publication and mention of the grant of the patent: **01.06.1994**
(21) Application number: 90101599.0
(22) Date of filing: 26.01.1990
(51) Int. Cl.: F23R 3/24, F23R 3/34, F23R 3/26, F23R 3/16, F02C 7/26, F02C 9/34

(54) **Gas turbine combustor and method of operating the same**
Gasturbinenbrennkammer und Betriebsverfahren dafür
Brûleur pour turbine à gaz et son procédé de fonctionnement

(30) Priority: 03.02.1989 JP 23884/89
(43) Date of publication of application: 08.08.1990
(73) Proprietor: HITACHI, LTD., Chiyoda-ku, Tokyo 101 (JP)
(72) Inventor: Urushidani, Haruo, Hitachi-shi (JP); Kirikami, Seiichi, Hitachi-shi (JP); Sato, Isao, Hitachi-shi (JP); Shimizu, Nobuo, Hitachi-shi (JP); Arai, Osamu, Hitachi-shi (JP); Shimura, Akira, Hitachi-shi (JP); Kuroda, Michio, Hitachi-shi (JP); Koga, Tsuguaki, Hitachi-shi (JP); Kurokawa, Tadashi, Katsuta-shi (JP); Ishibashi, Yoji, Hitachi-shi (JP); Hisano, Katsukuni, Hitachi-shi (JP)
(74) Representative: Beetz & Partner Patentanwälte

(56) References cited:
- EP-A- 0 169 431
- EP-A- 0 281 961
- US-A- 4 173 118
- US-A- 4 292 801
- PATENT ABSTRACTS OF JAPAN vol. 9, no. 311 (M-436)(2034) 07 December 1985 & JP-A-60 147035 (HITACHI LTD.) 11 November 1984
- PATENT ABSTRACTS OF JAPAN vol. 10, no. 29 (M-451)(2086) 05 February 1986,& JP-A-60 185024 (HITACHI LTD.) 20 September 1985,
- PATENT ABSTRACTS OF JAPAN vol. 9, no. 29 (M-356)(1752) 07 February 1985,& JP-A-59 173633 (HITACHI LTD.) 01 October 1984,

## Description

### BACKGROUND OF THE INVENTION

The invention relates to a gas turbine combustor which is partly of diffusion type and partly of premixed type and to a mehtod for operating such a gas turbine combustor.

In general, exhaust emissions from a gas turbine combustor contain substances such as NOx, CO, UHC (unburnt hydrocarbon) and the like which are causes of air pollution. Among these noxious substances, NOx is under a strict control by regulations, and various methods have been proposed for reducing emission of NOx. For instance, in a method known as wet-type NOx generation reducing method, water or steam is sprayed into a combustor. This method, however, is inevitably accompanied by a reduction in the efficiency of the gas turbine plant. Therefore, in recent years, a method known as dry-type NOx generation reducing method is becoming a major method. In this method, fuel is supplied into a combustor in a plurality of stages so that the combustion load in each stage is reduced and the combustion is conducted with a lean mixture so as to avoid generation of any local hot spot, thus reducing generation of NOx. However, it is not allowed to employ a large number of combustion stages, due to restriction in the design and construction. In general, therefore, so-called two-staged combustors having fuel nozzles at upstream and downstream sides of the combustor are widely used.

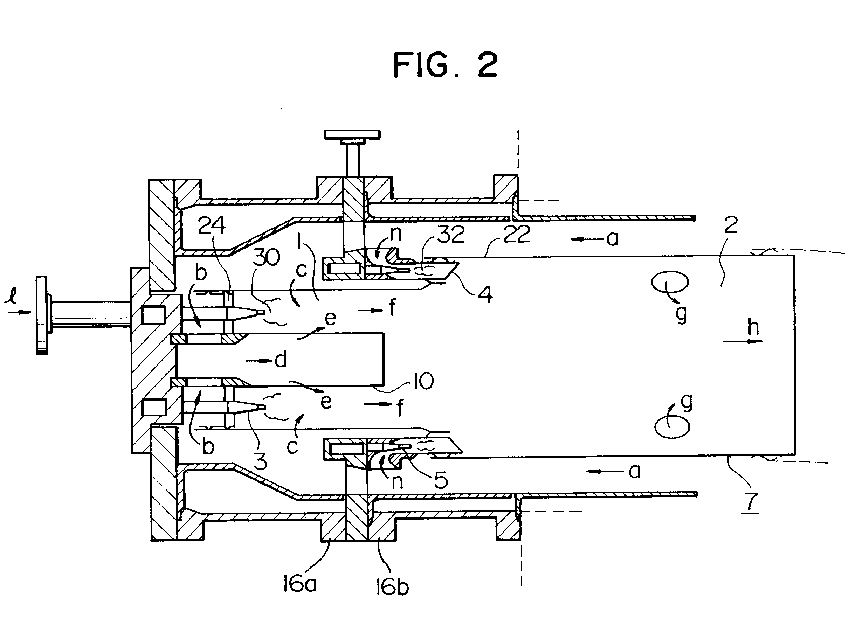

In the EP-A-0 169 431 and JP-A-56-25622 is disclosed such a two-staged combustor. A two-stage prior art combustor is shown in figure 2. The combustor has a cylindrical combustion sleeve 7 which is divided into two sections in the longitudinal direction thereof so as to define a sub-chamber 1 which is formed in an upstream side (left-hand side in Fig. 2) and intended for a first-stage combustion and a main chamber 2 which is formed in a downstream side and intended for a second-stage combustion. A first-stage fuel nozzle system (referred to as "F₁ fuel nozzle" hereinafter) 3 is disposed in a region near the upstream end of the sub-chamber 1. This fuel nozzle system 3 is of a diffusion type combustion in which the fuel 30 injected therefrom is diffused in the surrounding air c so as to be burnt with the air c.

An air swirler 4 is disposed at the end 22 of the main chamber 2 of the second stage. The fuel 32 discharged from a second-stage fuel nozzle systeme (referred to as "F₂ fuel nozzle" hereinafter) 5 is premixed with air n within the air swirler 4 so as to perform premixed combustion at the outlet of the air swirler 4.

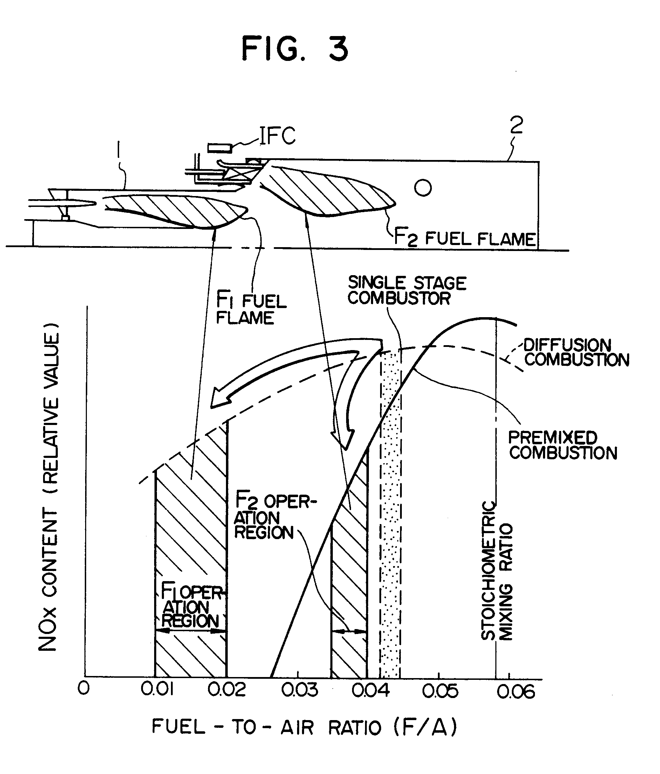

Fig. 3 is a graph showing the characteristics of generation of NOx both in the diffusion combustion and premixed combustion, wherein the axis of abscissa represents the fuel-to-air ratio and the axis of ordinate represents the NOx content in relative value.

The stoichiometric fuel-to-air ratio for methane gas is 0.058 and the gas turbine combustor is usually operated with a fuel-to-air ratio which is below this stoichiometric value. In single-staged combustors which have been conventionally used in countries where there is no requirement for reduction of NOx emissions, the fuel-to-air ratio at rated operation was in a range of around 0.04. Since the diffusion combustion is partly employed in this system, the NOx characteristic of this system exhibits such a tendency that the change in relative value of NOx content is comparatively small even if the fuel-to-air ratio is changed. Further, as shown in Fig. 3, in the premixed combustion it is a characteristic that the relative value of NOx content is drastically reduced when the fuel-to-air ratio decreases. The conventional combustor designed for reduced NOx emission is a so-called hybrid combustor in which these diffusion and premixed combustions are combined and, in operation thereof, the diffusion combustion alone is used while the load level is still low after the start-up of the gas turbine and the premixed combustion and the diffusion combustion are simultaneously used in the load range between a light load and a rated load. In Fig. 3, the flame in the sub-chamber 1 is the diffusion combustion flame, while the flame in the main chamber 2 is the premixed combustion flame. Conventional hybrid combustor employs an internal air flow rate control mechanism as indicated by IFC in Fig. 3 for the purpose of controlling the fuel-to-air ratio, in order to expand the region of the premixed combustion flame in the main chamber. In the past, the regulations on reduction in NOx content was not so strict, so that a simple two-staged combustion with a mere addition of premixed combustion zone (F₂ fuel flame) could satisfy such regulations. In recent years, however, the regulations on reduction in NOx content is becoming strict year by year and, to meet such a demand, it has become necessary to effectively reduce generation of NOx also in the first stage, i.e., in the diffusion combustion zone (F₁ fuel flame). To this end, it has been attempted to reduce generation of NOx by reducing the fuel-to-air ratio in the first stage combustion zone (F₁ fuel flame) and providing in the sub-chamber 1 with an inner sleeve 10 (see Fig. 2) so as to expand the diffusion combustion flame and thus increase its contacting area with the air to thereby reduce the flame temperature.

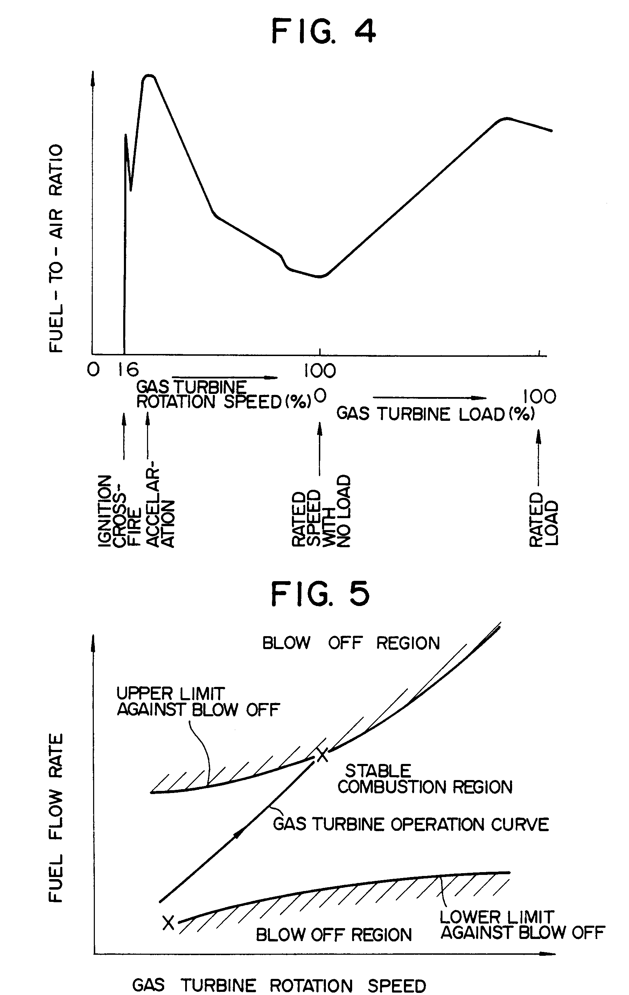

This arrangement, however, presents a new problem concerning a difficulty in maintaining the flame of diffusion combustion. Fig. 4 is a graph showing a characteristic of change in the fuel-to-air ratio in relation to the rotation speed of the gas turbine and the level of the load on the gas turbine. More specifically, in this Figure the axis of abscissa represents the rotation speed and the load level, while the axis of ordinate represents the fuel-to-air ratio. Ignition of the fuel is done when the gas turbine rotation speed is 16% of the rated speed and acceleration of the gas turbine is commenced after a period of warm-up which usually continues several minutes from the ignition. The fuel-to-air ratio drastically increases and reaches its peak during the acceleration. The fuel-to-air ratio is then progressively decreased and becomes minimum when the gas turbine has been accelerated to the rated speed under no load.

The fuel-to-air ratio then starts to increase again in accordance with an increase in the load level and is maximized immediately before the rated load is reached. The F₁ fuel nozzle 3 (see Fig. 2) is used from the start-up of the gas turbine until the load increases to about 30% of the load under the rated speed, and injects a large amount of the fuel during acceleration of the gas turbine. When a large amount of the fuel is injected, a shortage in oxygen takes place in the region around the F₁ fuel nozzle 3 because the space is restricted in this region, so that the flame from the F₁ fuel nozzle 3 (F₁ fuel flame) tends to blow off towards the main chamber having a comparatively large space with the result that the flame is extinguished or blown off as a result of contact with cold air. The rotation speed of the gas turbine at which the blow off of the flame takes place has a certain relation to the temperature of the air discharged from the gas turbine and, needless to say, the blow off or extinguishment of flame is retarded as the air temperature is raised.

Fig. 5 is a graph showing the relationship between fuel flow rate (axis of ordinate) and gas turbine rotation speed (axis of abscissa). In this Figure, a gas turbine operation curve represents the state of operation of the gas turbine as determined by the gas turbine rotation speed and the fuel flow rate. A mark X on this curve represents a point at which the flame is blown off. In the illustrated case, the blow off of the flame takes place when the rotation speed is comparatively low. A curve representing the upper limit against the blow off of the flame is obtained by connecting a plurality of such points of blow off. Similarly, there is a curve representing the lower limit against blow off of the flame. Therefore, in the start-up of the gas turbine it is necessary that the gas turbine combustor be operated under conditions which fall within the range between the curves representing the upper and lower limits against the blow off but this makes it impossible to increase an incremental ratio of the fuel flow rate so much, so that it has taken 15 to 20 minutes for the gas turbine to be started up and reached to the rated speed under no load.

Thus, the conventional art mentioned above has been very effective for reducing the NOx generation, but with respect to the quick start-up of the gas turbine it has a disadvantage in that during the start-up the blow off of the flame takes place or a very long time is required until the rated rotation speed is reached although the flame is not blown off.

US-A-4 292 801 discloses another example of a two-stage gas turbine combustor in which an upstream sub-chamber is aerodynamically separated from a downstream main chamber by a throat region. In the upstream end portion of the sub-chamber there is provided a first air and fuel supply system including a plurality of fuel nozzles and air swirlers positioned adjacent the outlet end of said nozzles. In the central portion of said sub-chamber there is disposed a sleeve formed by a plurality of spaced louvers and inside of said sleeve there is provided a coaxially directed further fuel nozzle of a second air and fuel supply system, which extends from the rear wall of the combustor towards the throat region. For reducing the NOx-generation during the start-up operation the fuel will be initially introduced through the air and fuel supply system in the sub-chamber and ignited therein. Thereafter, fuel is also injected through the central nozzle near the downstream end of the sub-chamber for ignition and burning in the main chamber. After finishing the start-up operation the generation of hot combustion gas in the sub-chamber is stopped by shutting off the fuel flow to the nozzles of the first supply system.

An object of the present invention is to provide a gas turbine combustor which generates a reduced amount of NOx and which enables a gas turbine to be started up in a desired short time and which can effectively stabilize the diffusion flame of F₁ fuel during start-up.

Another object of the present invention is to provide a method of operating a gas turbine combustor which enables the gas turbine to be started up in a short time.

These objects will be solved by the featurs of claim 1 and 7 resp.

According to the invention, it becomes unnecessary to increase the flow rate of the fuel supplied to the nozzle for the combustion in the sub-chamber even during start-up acceleration of the gas turbine. Thus, the combustion in the sub-chamber depending on the fuel-to-air ratio does never rush into the blow off region, so that the expected objects can be achieved.

### BRIEF DESCRIPTION OF THE DRAWINGS

Fig. 1 is a longitudinal sectional view of an embodiment of the gas turbine combustor according to the present invention;
Fig. 2 is a longitudinal sectional view of a conventional gas turbine combustor;
Fig. 3 is a graph showing a relationship between NOx content in exhaust emissions and fuel-to-air ratio of the mixture burnt in the gas turbine combustor;
Fig. 4 is a graph showing a relationship between fuel-to-air ratio and the gas turbine rotation speed;
Fig. 5 is a graph showing the relationship between flow rate of a fuel and the gas turbine rotation speed;
Fig. 6 is a graph showing the relationship between flow rate of a fuel and the gas turbine rotation speed;
Fig. 7a is a longitudinal sectional view of an example of a fuel injection nozzle;
Fig. 7b is a front elevational view of the fuel injection nozzle shown in Fig. 7a;
Fig. 8a is a longitudinal sectional view of another example of a fuel injection nozzle; and
Fig. 8b is a front elevational view of the fuel injection nozzle shown in Fig. 8a.

### DESCRIPTION OF THE PREFERRED EMBODIMENTS

Preferred embodiments of the present invention will be described with reference to the accompanying drawings.

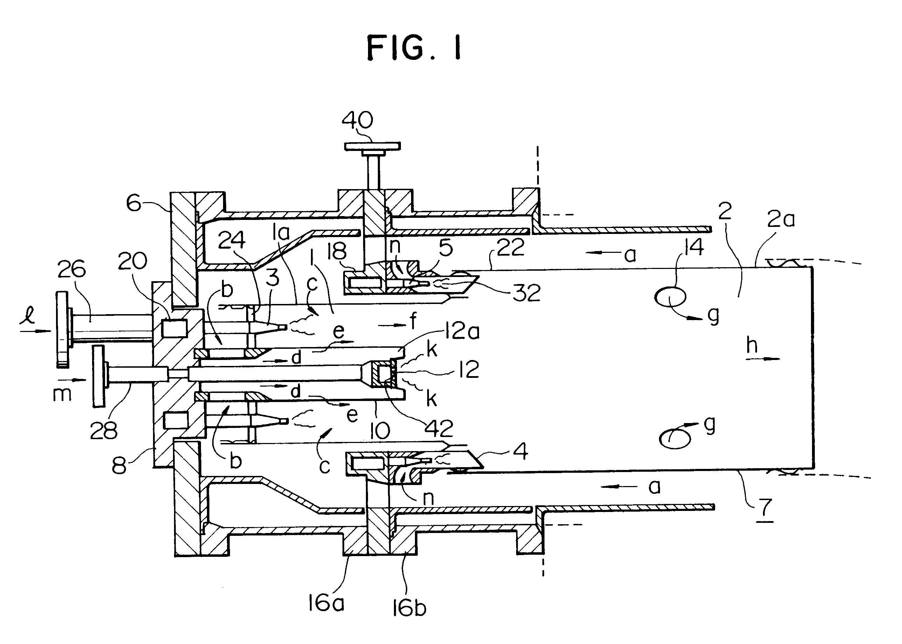

Fig. 1 shows in section an embodiment of the gas turbine combustor of the present invention.

The combustor is composed mainly of the following parts: i.e., a combustion sleeve 7; outer cylinders 16a and 16b surrounding the combustion sleeve 7; an end cover 6; a main chamber wall 2a forming a combustion main chamber 2; a sub-chamber wall 1a forming a combustion sub-chamber 1; a F₁ fuel nozzle 3 disposed in an upstream side (left-hand side in Fig. 1) of the sub-chamber 1; and an F₂ fuel nozzle 5 disposed in an upstream side of the main chamber 2.

The sub-chamber 1 formed in an upstream side of the combustion sleeve 7 has a diameter smaller than that of the main chamber 2 disposed in its downstream side and is used for burning a F₁ fuel supplied to an upstream side of the sub-chamber 1. The main chamber 2 disposed in a downstream side of the combustion sleeve 7 has a diameter greater than that of the sub-chamber 1 and is used for burning a F₂ fuel 32 supplied from a downstream side of the sub-chamber 1 (upstream side of the main chamber 2) and combustible substances such as CO, etc. which remained unburnt in the sub-chamber 1. The main chamber 2 is provided at its downstream side with diluting air ports 14 which allow air g to flow into the main chamber 2 to thereby lower the temperature of the combustion gas h to a predetermined level. The gas turbine combustor of the present invention employs a three-staged fuel supply system: namely, the F₁ fuel nozzle 3 for combustion mainly in the sub-chamber 1, the F₂ fuel nozzle 5 for combustion in the main chamber 2, and an Fₛ fuel nozzle 12 used during start-up of the gas turbine. The supply of air to the F₁ fuel nozzle 3 is conducted as indicated by arrows a and c, while the supply of air to the F₂ fuel nozzle 5 is conducted as indicated by arrows a and n. The supply of air to the Fₛ fuel nozzle 12 is conducted as indicated by arrows a, b, d and e. In general, the F₁ fuel nozzles 3 are individually inserted into the sub-chamber 2 through the end cover 6, while a number of F₂ fuel nozzles 5 are fixed to a joint portion between the sub-chamber 1 and the main chamber 2 while being arranged at a suitable circumferential pitch. Explaining this portion in detail, an air swirler 4 is disposed in the space between the main chamber 2 and the sub-chamber 1, and a fuel reservoir tube 18 is connected to upstream side of the air swirler 4. The fuel reservoir tube 18 is supplied with the fuel through an external fuel supply tube 40. A number of F₂ fuel nozzles 5 in the downstream side of the fuel reservoir tube 18 are arranged at a suitable circumferential pitch while being protruded into the air swirler 4. An inner sleeve 10 is disposed coaxially with the sub-chamber 1. The Fₛ fuel nozzle 12 is disposed on the downstream end of the inner sleeve 10 coaxially therewith. The Fₛ fuel nozzle 12 injects the fuel at a region which is slightly upstream of the F₂ fuel nozzle 5. The supply of the fuel to the Fₛ fuel nozzle 12 is conducted through a fuel supply system which is independent from the fuel supply systems for the F₁ and F₂ fuel nozzles.

A sleeve 12a is disposed on the peripheral edge of the Fₛ fuel nozzle 12 so as to protrude into the downstream side, thereby eliminating any influence of external turbulence and thus providing a recess for maintaining the flame.

As will be seen from Fig. 1, the gas turbine combustor further has a nozzle support plate 8, an F₁ fuel distribution groove 20, an air distribution plate 24, an F₁ fuel supply tube 26, and an Fₛ fuel supply tube 28.

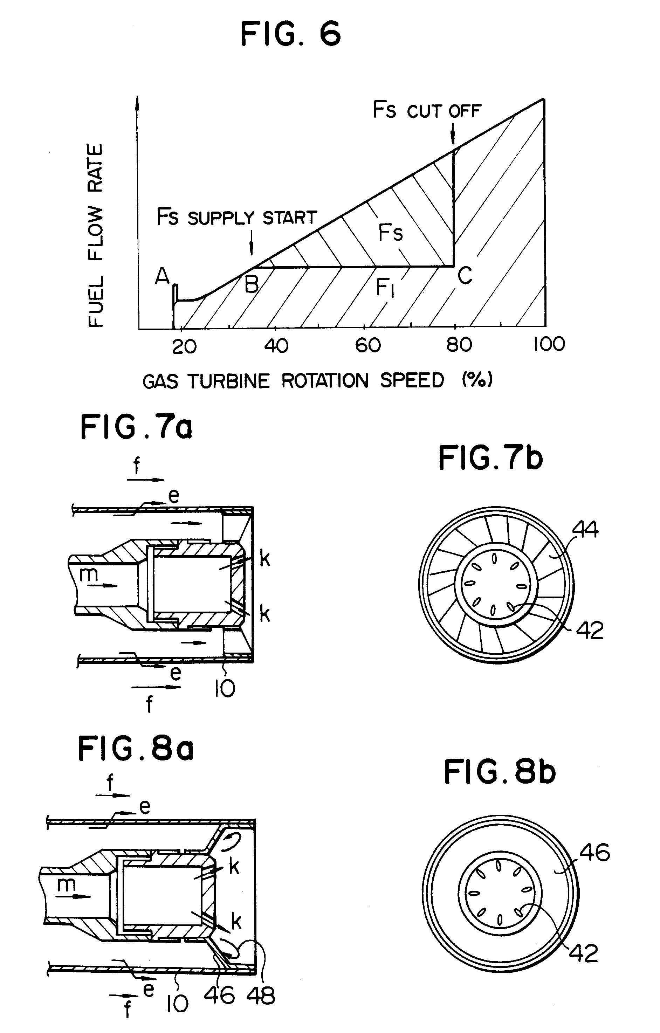

Next, it is explained as to how the Fₛ fuel nozzle 12 is operated during start-up of the gas turbine. Fig. 6 shows a pattern of supply of the fuel. When the gas turbine is started, the F₁ fuel ℓ (see Fig. 1) is supplied and ignited to effect a cross-fire (point A). Then, the flow rate of the F₁ fuel is progressively increased, and when it approaches a flow rate corresponding to the upper limit against the blow off of the flame the flow rate of the F₁ fuel ℓ is maintained constant and, at the same time, the supply of the Fₛ fuel m (see Fig. 1) is commenced (point B). As a result of the combustions with the F₁ and Fₛ fuel nozzles, the gas turbine is accelerated to a rotation speed at which the temperature of the combustion air supplied from a compressor into the combustor is high enough to maintain the operation of the gas turbine by the combustion with the F₁ fuel nozzle alone. When such a rotation speed is reached, the flow rate of the F₁ fuel ℓ is increased and the flow rate of the Fₛ fuel m is reduced (point C). The flow rate of the Fₛ fuel m is reduced to zero before the gas turbine under no load is accelerated to the rated speed.

Figs. 7a and 7b illustrate the detail of an example of the construction of the Fₛ fuel nozzle 12. This Fₛ nozzle 12 is provided, as means for improving an ability to hold the flame, with an air swirler 44 surrounding a nozzle tip 42 having eight fuel injection ports. The outside diameter of the air swirler 44 is selected such that the air swirler 44 just fits in the inner sleeve 10. The fuel gas is supplied as indicated by the arrow m and injected at a certain angle to the axis of the nozzle 12 as indicated by arrows k. Arrows e indicate the flow of air. The air cools the inner sleeve 10 and is made to swirl through the air swirler 44 so as to diffuse and be mixed with the fuel m. The inner sleeve 10 is surrounded by the flow of the combustion gas f formed by the F₁ fuel but the Fₛ fuel m can maintain a stable flame on the downstream of the air swirler 44 and the nozzle tip 42.

The ignition of the Fₛ fuel m is performed automatically by the hot combustion gas f from the F₁ fuel nozzle, when the supply of the Fₛ fuel m is commenced.

Figs. 8a and 8b show another example of the Fₛ fuel nozzle 12 which improves an ability to hold flame. In this Fₛ fuel nozzle 12, instead of the air swirler 44, a baffle sleeve 46 is provided so as to fit in the inner sleeve 10, thereby forming a stable flame of the Fₛ fuel m independently of the hot combustion gas f which is formed by the F₁ fuel and which surrounds the Fₛ nozzle 12. Particularly, since small vortexes 48 are formed on the outer peripheral side of the baffle 46, they serve as igniting fire which continuously ignites the fuel k injected from the Fₛ fuel nozzle 12.

As has been described above, in the gas turbine combustor of the present invention, since there is provided in the combustion sub-chamber with an inner sleeve extending from the upstream side wall of the sub-chamber toward the downstream side thereof and there is further provided in the downstream side tip of the inner sleeve with a fuel nozzle which injects the fuel during a change in rotation speed of the gas turbine, it becomes unnecessary even during start-up acceleration of the gas turbine to increase a flow rate of the fuel supplied to a fuel nozzle for combustion in the sub-chamber, i.e. it becomes that the combustion in the sub-chamber depending on the fuel-to-air ratio does not rush into the blow off region, so that it becomes possible to stably maintain the flame in the sub-chamber and to start up the gas turbine in a short time.

## Claims

1. A gas turbine combustor,
comprising
- a combustion main chamber (2) disposed in a downstream side of a combustion sleeve (7),
- an air and fuel supply system (a, n, 5, 18) of a premixed combustion type provided in said main chamber (2),
- a combustion sub-chamber (1) disposed in an upstream side of the combustion sleeve (7),
- an air and fuel supply system (a, c; 3, 20) of a diffusion combustion type disposed in said sub-chamber (1),
- an inner sleeve (10) provided in the central portion of the sub-chamber (1) and protruding from the upstream end wall (8) to the vicinity of the downstream end of said sub-chamber (1),
**characterized** in that
for increasing the fuel-air ratio during the start-up operation of the gas turbine an additional and separately controlled air fuel supply system (d, m, 12, 12a) of a diffusion combustion type is provided having an additional fuel nozzle (12) disposed at the downstream end of the inner sleeve (10).

2. Gas turbine combustor according to claim 1,
characterized in that
a sleeve (12a) is disposed on the peripheral edge of the additional fuel nozzle (12) protruding into the downstream side and forming a recess for maintaining the flame.

3. Gas turbine combustor according to claim 1 or 2,
characterized in that
the additional fuel nozzle (12) is provided with a nozzle tip (42) having several fuel injection ports.

4. Gas turbine combustor according to claim 3,
characterized in that
the additional fuel nozzle (12) is surrounded by an air swirler (44) inserted in the inner sleeve (10).

5. Gas turbine combustor according to claim 3,
characterized in that
the additional fuel nozzle (12) is provided with a baffle sleeve (46) inserted in the downstream end portion of the inner sleeve (10).

6. Gas turbine combustor according to claims 1 to 5,
characterized in that
the upstream end portion of the additional fuel nozzle (12) is fixed in a nozzle support plate (8) having a fuel distribution groove (20) for the distribution of the fuel gas to the plurality of fuel nozzles (3) in the sub-chamber (1) and provided with separate fuel supply ports (26, 28) leading to the distribution groove (20) and to the additional fuel nozzle (12).

7. Method for operating a gas turbine combustor, in which
- during the start-up operation the gas turbine will be driven and accelerated by hot combustion gas (f) generated in a combustion sub-chamber (2) by a first air and fuel system of the diffusion combustion type and
- during the loaded operation the gas turbine will be driven by hot combustion gas (h) generated in a main chamber (1) disposed downstream of the sub-chamber (2) by a second air and fuel supply system of the pre-mixed combustion type,
characterized in that
during the acceleration of the start-up operation an additional amount of hot combustion gas will be generated in the downstream end portion of the sub-chamber by a third air and fuel system of the diffusion type.

8. Method according to claim 7,
characterized in that
the additional amount of hot combustion gas will be generated during a term in which the gas turbine will be accelerated from 20 % to 60 % of its rated speed.

9. Method according to claim 7 or 8,
characterized in that
the fuel flow rate in the third air and fuel supply system will be controlled as a function of the gas turbine rotation speed.

## Patentansprüche

1. Gasturbinen-Brenner mit
- einer in einem abstromseitigen Teil eines Brennrohrs (7) angeordneten Haupt-Brennkammer (2),
- einem in der Haupt-Brennkammer (2) vorgesehenen Luft- und Kraftstoff-Zufuhrsystem (a, n, 5, 18) vom Vormisch-Verbrennungstyp,
- einer in einem aufstromseitigen Teil des Brennrohrs (7) angeordneten Vorbrennkammer (1),
- einem in dieser Vorbrennkammer (1) angeordneten Luft- und Kraftstoff-Zufuhrsystem (a, c; 3, 20) vom Diffusions-Verbrennungstyp und
- einem im zentralen Teil der Vorbrennkammer (1) vorgesehenen Innenrohr (10), das sich von der stromaufseitigen Endwand (8) bis in die Nähe des abstromseitigen Endes der Vorbrennkammer (1) erstreckt,
**dadurch gekennzeichnet, daß**
- zur Vergrößerung des Kraftstoff-Luft-Verhältnisses beim Anfahrbetrieb der Gasturbine ein zusätzliches und gesondert gesteuertes Luft-Kraftstoff-Zufuhrsystem (d, m, 12, 12a) vom Diffusions-Verbrennungstyp vorgesehen ist, das eine am abstromseitigen Ende des Innenrohrs 10 angeordnete zusätzliche Kraftstoffdüse (12) aufweist.

2. Gasturbinen-Brenner nach Anspruch 1,
dadurch gekennzeichnet,
daß ein Rohr (12a) am Umfangsrand der zusätzlichen Kraftstoffdüse (12) angeordnet ist, das sich zur Abstromseite erstreckt und eine Ausnehmung zur Aufrechterhaltung der Flamme bildet.

3. Gasturbinen-Brenner nach Anspruch 1 oder 2,
dadurch gekennzeichnet,
daß die zusätzliche Kraftstoffdüse (12) ein Mundstück (42) mit mehreren Kraftstoffeinspritzöffnungen aufweist.

4. Gasturbinen-Brenner nach Anspruch 3,
dadurch gekennzeichnet,
daß die zusätzliche Kraftstoffdüse (12) von einem in das Innenrohr (10) eingebauten Luftwirbel-Erzeuger (44) umgeben ist.

5. Gasturbinen-Brenner nach Anspruch 3,
dadurch gekennzeichnet,
daß die zusätzliche Kraftstoffdüse (12) mit einem in den abstromseitigen Endteil des Innenrohrs (10) eingesetzten Leitrohr (46) versehen ist.

6. Gasturbinen-Brenner nach Anspruch 1 bis 5,
dadurch gekennzeichnet,
daß der stromaufseitige Endteil der zusätzlichen Kraftstoffdüse (12) in einer Düsenhalteplatte (8) befestigt ist, die einen Kanal (20) zur Verteilung des Brenngases auf die verschiedenen Kraftstoffdüsen (3) in der Vor brennkammer (1) enthält und mit separaten Kraftstoffzufuhrstutzen (26, 28) versehen ist, die zu dem Verteilungskanal (20) und zu der zusätzlichen Kraftstoffdüse (12) führen.

7. Verfahren zum Betrieb eines Gasturbinen-Brenners, bei welchem
- die Gasturbine während des Anfahrbetriebs durch das in einer Vorbrennkammer (2) mittels eines ersten Luft- und Kraftstoff-Systems vom Diffusions-Verbrennungs-Typ erzeugte heiße Verbrennungsgas (f) angetrieben und beschleunigt wird,
- die Gasturbine während des Lastbetriebs durch heißes Verbrennungsgas (h) angetrieben wird, das in einer stromab der Vorbrennkammer (2) angeordneten Hauptbrennkammer (1) mittels eines zweiten Luft-Kraftstoff-Zufuhrsystems vom Vormisch-Verbrennungstyp erzeugt wird,
**dadurch gekennzeichnet, daß**
- während der Beschleunigung des Anfahrbetriebs eine zusätzliche Menge an heißem Verbrennungsgas am abstromseitigen Endteil der Vorbrennkammer mittels eines dritten Luft-Kraftstoff-Systems vom Diffusions-Verbrennungstyp erzeugt wird.

8. Verfahren nach Anspruch 7,
dadurch gekennzeichnet,
daß die zusätzliche Menge an heißem Verbrennungsgas während einer Zeitspanne erzeugt wird, in welcher die Gasturbine von 20 bis 60 % ihrer Drehzahl beschleunigt wird.

9. Verfahren nach Anspruch 7 oder 8,
dadurch gekennzeichnet,
daß der Kraftstoffdurchfluß im dritten Luft-Kraftstoff-Zufuhrsystem in Abhängigkeit von der Gasturbinen-Drehzahl gesteuert wird.

## Revendications

1. Système de chambre de combustion pour turbine à gaz,
comprenant
- une chambre principale de combustion (2) disposée en aval d'une enceinte de combustion (7),
- un circuit (a, n, 5, 18) d'alimentation en air et en combustible, de type à combustion avec mélange préalable, disposé dans ladite chambre principale (2),
- une chambre secondaire de combustion (1) disposée en amont de l'enceinte de combustion (7),
- un circuit (a, c; 3, 20) d'alimentation en air et en combustible, de type à combustion avec diffusion, disposé dans ladite chambre secondaire (1),
- une enceinte intérieure (10) disposée dans la partie centrale de la chambre secondaire (1) et faisant saillie depuis la paroi (8) d'extrémité amont jusqu'au voisinage de l'extrémité aval de ladite chambre secondaire (1),
caractérisé en ce que
pour accroître la valeur du rapport combustible-air pendant l'opération de démarrage de la turbine à gaz, on dispose d'un circuit supplémentaire (d, m, 12, 12a) d'alimentation en air et en combustible, commandé séparément, de type à combustion avec diffusion, ce circuit comportant une tuyère supplémentaire (12) d'injection de combustible disposée à l'extrémité aval de l'enceinte intérieure (10).

2. Système de chambre de combustion pour turbine à gaz selon la revendication 1,
caractérisé en ce que
sur le bord périphérique de la tuyère supplémentaire (12) d'injection de combustible est disposé un manchon (12a) faisant saillie vers l'aval et formant un évidement pour contenir la flamme.

3. Système de chambre de combustion pour turbine à gaz selon la revendication 1 ou 2,
caractérisé en ce que
la tuyère supplémentaire (12) d'injection de combustible comporte une embouchure (21) de tuyère ayant plusieurs orifices d'injection de combustible.

4. Système de chambre de combustion pour turbine à gaz selon la revendication 3,
caractérisé en ce que
la tuyère supplémentaire (12) d'injection de combustible est entourée par un ventilateur (44) à tourbillon d'air inséré dans l'enceinte intérieure (10).

5. Système de chambre de combustion pour turbine à gaz selon la revendication 3,
caractérisé en ce que
la tuyère supplémentaire (12) d'injection de combustible comporte un manchon (46) à déflecteur inséré dans la partie formant extrémité aval de l'enceinte intérieure (10).

6. Système de chambre de combustion pour turbine à gaz selon les revendications 1 à 5,
caractérisé en ce que
la partie formant extrémité amont de la tuyère supplémentaire (12) d'injection de combustible est fixée dans une plaque (8) de support de tuyère ayant une gorge (20) de distribution de combustible pour la distribution du combustible gazeux à la pluralité de tuyères (3) d'injection de combustible de la chambre secondaire (1) et comportant des orifices séparés (26, 28) d'alimentation en combustible débouchant dans la gorge de distribution (20) et dans la tuyère supplémentaire (12) d'injection de combustible.

7. Procédé pour faire fonctionner un système de chambre de combustion pour turbine à gaz, dans lequel
- pendant l'opération de démarrage, la turbine à gaz est entraînée et amenée à accélérer par des gaz de combustion chauds (f) produits dans une chambre secondaire (2) de combustion par un premier circuit d'alimentation en air et en combustible du type à combustion avec diffusion, et
- pendant le fonctionnement en charge, la turbine à gaz est entraînée par les gaz de combustion chauds (h) produits dans une chambre principale (1) disposée en aval de la chambre secondaire (2) par un second circuit d'alimentation en air et en carburant du type à combustion avec mélange préalable,
caractérisé en ce que
pendant l'accélération de l'opération de démarrage, une quantité supplémentaire de gaz de combustion chauds est produite dans la partie formant extrémité aval de la chambre secondaire par un troisième circuit d'alimentation en air et en combustible du type avec diffusion.

8. Procédé selon la revendication 7,
caractérisé en ce que
la quantité supplémentaire de gaz de combustion chauds est produite pendant un laps de temps durant lequel la turbine à gaz accélère de 20% à 60% de sa vitesse nominale.

9. Procédé selon la revendication 7 ou 8,
caractérisé en ce que
le débit du combustible dans le troisième circuit d'alimentation en air et en combustible est commandé en fonction de la vitesse de rotation de la turbine à gaz.
